# EUROPEAN PATENT SPECIFICATION

(11) **EP 1 789 945 B1**
(45) Date of publication and mention of the grant of the patent: **11.07.2012**
(21) Application number: 05778165.0
(22) Date of filing: 30.08.2005
(51) Int. Cl.: G09G 3/00, H04N 17/04

(54) **A METHOD FOR TESTING ELECTRONIC DEVICES**
VERFAHREN ZUM TESTEN ELEKTRONISCHER EINRICHTUNGEN
PROCEDE D'ESSAI DE DISPOSITIFS ELECTRONIQUES

(30) Priority: 30.08.2004 FI 20045312
(43) Date of publication of application: 30.05.2007
(73) Proprietor: Optofidelity OY, 33720 Tampere (FI)
(72) Inventor: AIMONEN, Pertti, FI-33960 Pirkkala (FI); HONKANEN, Mikael, FI-40700 Jyväskylä (FI); JEKKONEN, Jari, FI-40820 Haapaniemi (FI); JOKINEN, Kimmo, FI-33720 Tampere (FI); SARVALA, Kari, FI-40270 Palokka (FI); SARVILUOMA, Jani, FI-33720 Tampere (FI)
(74) Representative: Rahkonen, Erkki Juhani
(86) International application number: PCT/FI2005/050304
(87) International publication number: WO 2006/024698

(56) References cited:
- EP-A1- 1 377 080
- US-A- 5 032 769
- US-A- 5 122 651
- US-A- 5 175 772
- US-A- 5 572 444
- US-A1- 2002 157 033

## Description

### Field of the invention

The present invention relates to a method for testing electronic devices, in which method the display of said electronic device is imaged for obtaining measurement data, and changes on the display of the electronic device are examined. The invention also relates to a system for testing electronic devices, which system comprises a camera device for recording changes on the display of the electronic device and for obtaining measurement data. Furthermore, the invention relates to a synchronization module, a testing data product, a computer software product, as well as an analysis system.

### Background of the invention

The standards for existing electronic devices and for those under development are continuously increasing, and partly for that reason, the devices in question have been subjected to legal obligations, such as the protective standards on EMC (Electro Magnetic Compatibility), which define whether the electronic device in question interferes with other devices or whether other devices interfere with said device. Such immunity of an electronic device to interference can be measured, for example, by EMC tests. The source of the interference, to which the device is subjected, may be any external or internal phenomenon. External phenomena to be mentioned include other electric devices (for example, microwave ovens) or static electricity, and internal phenomena of the device include high frequencies and powers as well as oscillators.

In the testing of devices with a display, for example wireless devices, interference can be examined by imaging the display, for example with a camera, to obtain a digital video which is visually observed afterwards to find points where the operation of the device was disturbed by EMC testing. The visual analysis of test videos is subjective and does not allow a precise measurement or automatic testing. Furthermore, because the analysis is carried out first after the test, the test cannot be interrupted when a defect is detected. This is another reason why the testing time of the electronic device becomes longer. The automation of the testing may be based on a comparison between the measured image and a reference image. For this, the images must be synchronized. In the testing of analog image tubes, for example a CRT, the measurement can be synchronized directly with the electronic components or signals of the vertical or horizontal scanning lines of the picture element circuit of the image tube, because the device to be tested is not wireless.

One quality assessment of television receivers and displays is described, for example, in the brochure by Rohde & Schwartz, "EMS Test System Audio and Video R&S TS9980 - Measuring the electromagnetic susceptibility of sound and TV broadcast receivers, satellite and DVB receivers". In this publication, the testing is based on a comparison with a reference image. The test images are recorded by a video camera from the displays of the devices to be tested. In the method, at least five reference images are recorded, from which an average regression function is computed. The above-mentioned function gives the estimated threshold by the maximum deviation of the measured values. After this, a required interference signal is used, and one or more test images are recorded in each variant of the interference variable (frequency or level). After this, a regression function is computed at each stage of assessment. If the deviation is greater than that defined in the reference image, visible image interference can be expected to appear in the image. In the testing, a CCD cellular camera is used for recording images, which camera is covered with a dark hood to avoid interfering light. The RGB (Red, Green, Blue) signal from the camera is transferred to an image analysis unit. For synchronizing the image with a refresh rate, the synchronization signal must be input in the camera. These two signal buses apply fiber optics to avoid electromagnetic oscillation. The product in question has been developed for the measurement of electromagnetic interference in a television set, as well as for the measurement of electronic devices that can be galvanically coupled during the testing (for example, TFT television). Such a method is not suitable, as such, for the testing of e.g. a mobile phone, because the interface should be wireless or optical. Moreover, for example LCD/TFT displays do not comprise such analog vertical or horizontal synchronization circuits that are used in said image tube technology.

Publication US A 5 572 444 discloses a solution for analyzing interferences of a displaying device. The disclosure discusses test signals and models to be presented on the display which test signals and models have one parameter. The code within the test model is used to estimate which test is going on. US A 5 572 444 provides automatic testing solution for all kind of video displays without existence of a human. The problem on a background of US A 5 572 444, is a closed-loop system, where the sensor interpreting the content of the display to be tested needs to be given information on the content and the test separately. Therefore, the solution of US A 5 572 444 relates to analog systems, and does not discuss on synchronization or how the image can be improved. In addition, the system of US A 5 572 444 is not suitable for EMC testing, because of a galvanic connection from a signal generator to the display to be tested.

Publication EP A1 1 377 080 discloses a testing system for a mobile device. In such a system, the quality of the images observed. The solution of EP A1 1 377 080 does not relate to a interference testing, such as EMC, but to quality observation of an image or a video sequence.

Publication US 2002 157 033 A1 discloses an improved and simplified testing of displays (of mobile devices). The solution is not suitable for non-galvanic environment and interference testing, such as EMC. It is said on p. 2 [0028] of US 2002 157 033 A1 that electric wires are coupled to the device to be tested, so that the device can be connected to the signal generator. US 2002 157 033 A1 is an example of simple production testing method using a static image.

Publication US A 5 175 772 discloses a test for a receiver having a display. The display is controlled to produce a plurality of display patterns, which are measured, whereby the measured display patterns are compared with a reference value to determine the integrity of the display patterns. The solution of US A 5 175 772 does not suit for the present problem because of the wired connections between the device being tested as well as the testing unit.

Publication US A 5 032 769 discloses a device for measuring convergence of a color CRT. In US A 5 032 769 a CCD camera has been synchronized optically to glowing of the display operating on a constant frequency (60Hz) in order to determine on which frequency the glowing attenuates. Document US A 5 032 769 is aimed for CRT technology, and is not suitable for e.g. LCD/TFT displays where "glowing" is unknown phenomenon.

Consequently, it can be appreciated that a method that would allow the testing of a device without a galvanic connection and would thus be suitable for the testing of, for example, a mobile phone, is not known from prior art. The present invention discloses one such solution that is also suitable for the testing of other devices than just mobile phones, and that is, furthermore, not dependent on the method of connection.

### Summary of the invention

The aim of this invention is to provide a solution for the testing of electronic devices, which solution is both efficient and accurate.

The method according to the invention is defined in claim 1.

The analysis system according to the invention is defined in claim 7.

The invention provides a precise method for testing various displays, such as liquid crystal or plasma displays (for example LCD, TFT, OLED displays). By this method, it is also possible to automate the immunity testing of a device comprising said display (for example EMC, EMS, ESD, PET testing). Thanks to the automated and optimized arrangement according to the invention, the displays of various electronic devices, such as mobile phones, can be measured at various display refresh rates, with various display electro-optical response times, operating system delays and various video image rates. Up to date, these delays, which are independent of each other, have induced e.g. ghost images and corresponding interference due to the asynchronized imaging. They have prevented the automation of the analysis and disturbed the visual examination. Furthermore, in so far as the test results of existing techniques depend subjectively on the observations of the testing person, the test results according to the invention are objective and comparable with each other. Thanks to the invention, the testing can be automated, since the precise measurement makes automatic analysing possible. Among other things, this accelerates the testing time and saves costs.

A requirement for the automation is a calibration function, in which a reference video recorded in an undisturbed environment is compared, image by image, with a video or an image series recorded during testing. Because the item to be tested may move in relation to the camera during the test, the calibration can be performed automatically during the test, thereby automating the measurement. This reference video calibration function also makes it possible to change the devices to be tested in a flexible way between the tests, as well as eliminates the harmful effect of optical phenomena (for example, the Moire phenomenon) from the measurement.

### Description of the drawings

In the following, the invention will be described in more detail with reference to the appended drawings, in which
- Fig. 1: shows a simplified example of a system according to the invention,
- Fig. 2: shows a more detailed example of the system according to the invention,
- Fig. 3: shows a more detailed example of an analysis device according to the invention,
- Fig. 4: shows one example of a user interface according to the invention,
- Fig. 5: shows one example of a test image according to the invention,
- Fig. 6: shows yet another example of a system according to the invention, and
- Fig. 7: shows an example of steps 610 to 620 in Fig. 6.

### Detailed description of the invention

The present invention relates to the immunity testing of electronic devices, such as EMC testing, but it will be obvious that the arrangement according to the invention can also be used in other application domains including, for example, production EMC test equipment (PET) or the testing and validation of components and modules.

In this specification, a mobile phone will be described as an example of an electronic device, but it will be obvious for a person skilled in the art that also other devices with a display, such as a personal digital assistant, a portable computer, flat screen television sets, portable game consoles, video cameras, digital cameras, and portable DVD players, etc. can be tested by means of the system according to the invention. The reason for using the mobile phone as an example is that its synchronization with the refresh rate, for example by a galvanic connection, may cause interference in the testing. Consequently, the testing may not necessarily comply with the requirements. In this example, the connection to the refresh rate is implemented by fibre optics.

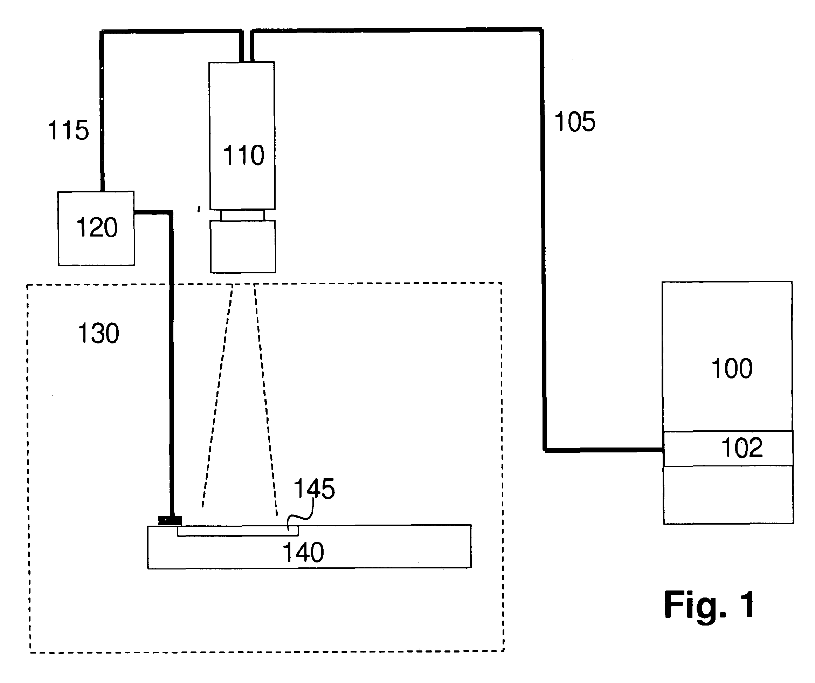

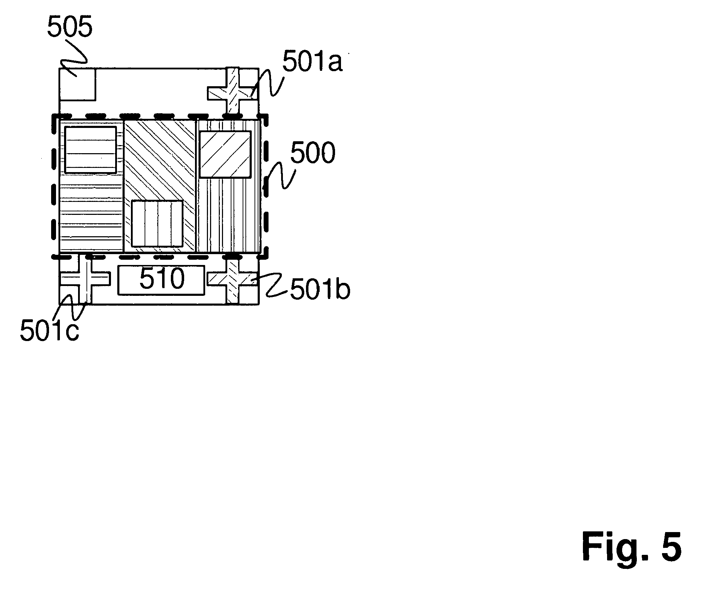

One embodiment of the system according to the invention is shown in a reduced manner in Fig. 1. The system is an automatic monitoring system based on machine vision, which can be used to detect visual changes in displays during interference testing. Such changes include, for example, noise, an image break, refresh failures, colour failures, changes or stops in the video playback speed, etc. The system comprises a camera device 110, a synchronization module 120, as well as an analysis device 100. The camera device 110 is coupled to a synchronization module 120 as well as to an analysis device 100 by means of cables 115, 105, respectively. The synchronization means are coupled by fibre optics to the electronic device 140 to be tested. In Fig. 1, reference numeral 130 indicates an area defined by broken lines, inside which no other electronic devices can be introduced in the vicinity of the device to be tested, for successful testing. In the arrangement according to the invention, the representation properties of the display 145 of the device 140 to be tested, that is, the refresh rate, the electro-optical response time and the video image rate, are measured, for example, by fibre optics together with the synchronization module 120 or a measuring card. In some cases, the measurement of the representation properties of the display can also be implemented wholly by means of a camera device in such a way that a specific image sensor area of the camera measures the representation properties of the display and synchronizes the cell area imaging the rest of the display. The arrangement according to the invention also utilizes testing data suitable for the display, such as a test image or a test video (Fig. 5), which are run on the display 145 of the device to be tested. In the test video, the even and odd images are marked with synchronization identifiers in such a way that a change of images can be detected. In this specification, the test video is given as an example, but it will be obvious that this test video can be replaced by one or more test images.

Figure 5 shows one example of an image 500 in a test video, comprising a synchronization area 505, locating marks 501 a, 501 b, 501 c, as well as an image identifier 510. The synchronization area 505 of the image can be marked, for example, in such a way that the odd images of the video (odd image identifier) are marked with a black pixel and the even images with a bright pixel. By means of the synchronization area 505 (for example, said alternating white and black) it is possible to detect when the image 500 of the test video is changed in reality. The image rate may vary, for both external and internal reasons, and it is unpredictable. The synchronization area 505 may comprise identifying information other than said colouring. Examples include a changing graphic pattern or another changing visual identifier.

By means of the location marks 501 a, 501b, 501 c, the active area of the display can be defined accurately, and also the position of the display can be defined by means of a particular colour comparison (a separate fixed colour for each corner). The image identifier 510 indicates which single image is in question. This makes an accurate analysis for a reference video possible. The image identifier 510 may be encoded by a known encoding method to increase reliability. Examples to be mentioned include redundant encoding and Hamming encoding. The image identifier 510 can be selected to be either a numeral block (0, 1) or a binary block (identification by either optical text recognition or by means of intensity on gray scale and coordinates). The test video comprises more than one image, every second image comprising a synchronization area of a different colour. It is thus possible to detect a change of images.

On the display, it is possible to change the locations of the synchronization area 505 and of the image identifier 510 of the test video by programming. The single images 500 of the test video are designed so that all the defined interference types could be detected as efficiently as possible by image analysis. These interference types include, for example, changes in the video playback speed, increased noise, horizontal/vertical shift/mirrorring, changes in the intensity, and increased noise in the edge zones. The video playback rate can be seen from the image rate so that changes in the speed of the synchronization signal are detected in connection with image capture. The difference image analysis can be used for monitoring the quantity of noise as well as for detecting changes in the intensity. By means of the difference image analysis, it is possible to detect both local changes in the image (for example, in the edge zones) as well as changes affecting the whole image.

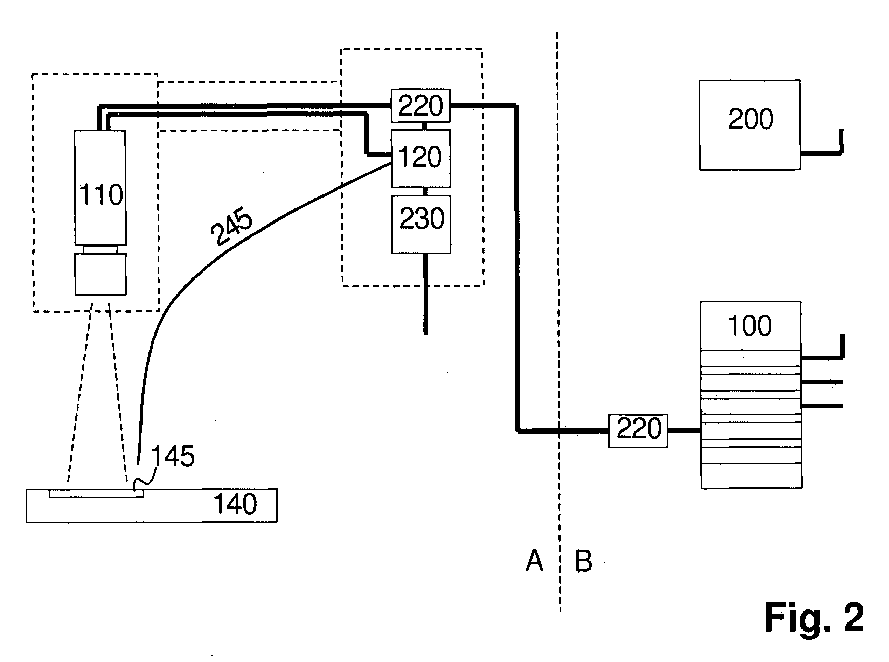

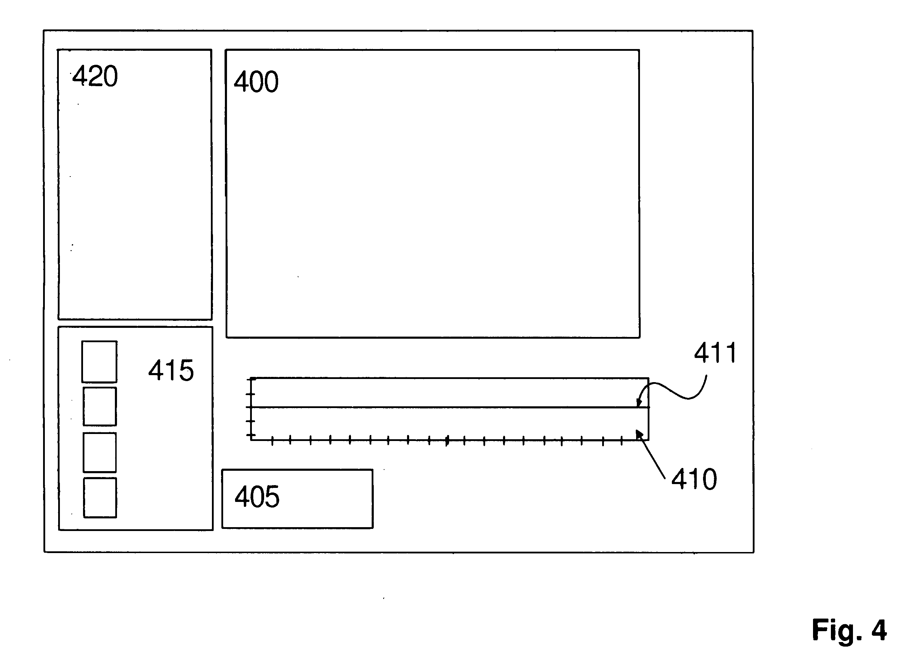

We shall now return to Fig. 1, in which the detection of said synchronization areas is implemented by the synchronization module 120. In the arrangement according to the invention, the defects/disturbances are computed on the basis of the content of the test video. The single images of the test video can be counted, for example, on the basis of a number of another identifier. The single images can be compared with reference image material with the help of said individual image identifier. The reference image material and the measured image data are compared with each other by the image analysis according to the invention, and the difference measurement of this comparison is reported. Figure 4 shows, in a very reduced manner, a user interface divided for reporting and analysis. The user interface may comprise, for example, an event browsing field 420 comprising a time label of the event and a list of visible disturbances in each event during the testing. It is possible to obtain further information and history data on each disturbance by "opening" the event in question. The further information is retrieved from an interference database (Fig. 2). In addition to this, the user interface may present the disturbances of a selected single event as thumbnails 415, through which visible disturbances can be viewed and browsed. Furthermore, the user interface comprises an event player 400, by means of which the occurred disturbances can be presented and observed in more detail. In addition, the user interface may comprise a field for a verbal description 405 of the interference. The interference reporting according to the invention is presented in the report field 410 of the user interface, a difference measurement graph being depicted on its time axis. From the difference measurement graph, the user can see the disturbances/defects in the test at one glimpse. This difference measurement graph is presented in the field in such a way that disturbances above a division line 411 can be interpreted as visible defects, whereas disturbances below the division line 411 are not visible to the human eye. Furthermore, the difference measurement graph can be used for browsing the recorded video forward/backward.

The basic components of the analysis system according to the invention were shown in Fig. 1. The example of the analysis system shown in Fig. 2 gives slightly more details. In this example, the analysis system is divided between two physical spaces A, B. The testing space A comprises a camera device 110 set to record the display 145 of an electronic device 140. The high-resolution camera device 110 is coupled to a synchronization module 120 as well as to a fibre converter 220, and it is arranged to transfer synchronized images on the display 145 of the electronic device to be tested, on the basis of runnable videos. The synchronization module 120 is further connected to the display 145 of the electronic device by fibre optics 245. The synchronization module 120 (the module may be a commercial card with programmable filterings, or these functions may be implemented by circuits) comprises a transducer and a signal circuit generating a synchronization signal.

The analysis space B comprises an analysis device 100 according to the invention, such as a personal computer. This analysis device 100 may comprise a WLAN/Bluetooth connection or another local area network connection as well as other connections providing a data transmission connection to an external device 200. The device 200 can be used, for example, for displaying live video from a camera and for performing optical adjustments in the test space A (for example, adjustment of the optics/angle of the camera and its effect on the image).

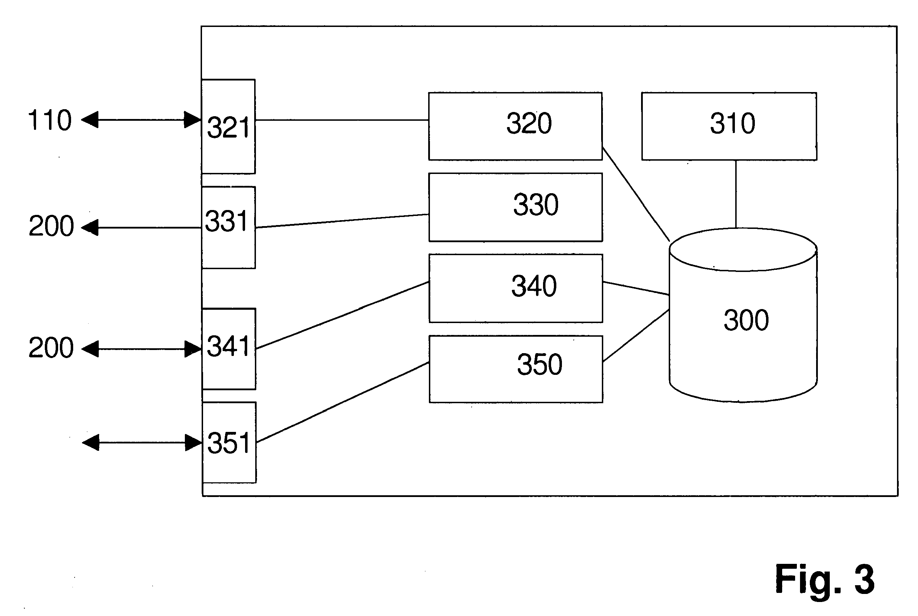

Figure 3 shows an example of the analysis device 100 according to the invention in more detail. The analysis device 100, such as a personal computer in this example, may comprise one or more test databases 300 for recording the test results and the videos with defects. Furthermore, the analysis device 100 comprises analysis software 320 and, if necessary, video software 330, configuration software 340, and an interface 350. Furthermore, the analysis device 100 comprises a reporting service 310 that makes automated reporting possible. The analysis software 320 receives from the camera device recorded material about the display during the testing. By some data transmission technique 3, the video software 330 may be connected to e.g. a portable computer or a personal digital assistant for the purpose of transmitting live video image supplied by the analysis device for adjusting the camera device. The analysis device 100 may be arranged in a data transmission connection with the testing device, for example via a GPIB connection 351 (General Purpose Interface Bus). Furthermore, the analysis device 100 may also be in a data transmission connection 341 with other systems, for example via an Ethernet.

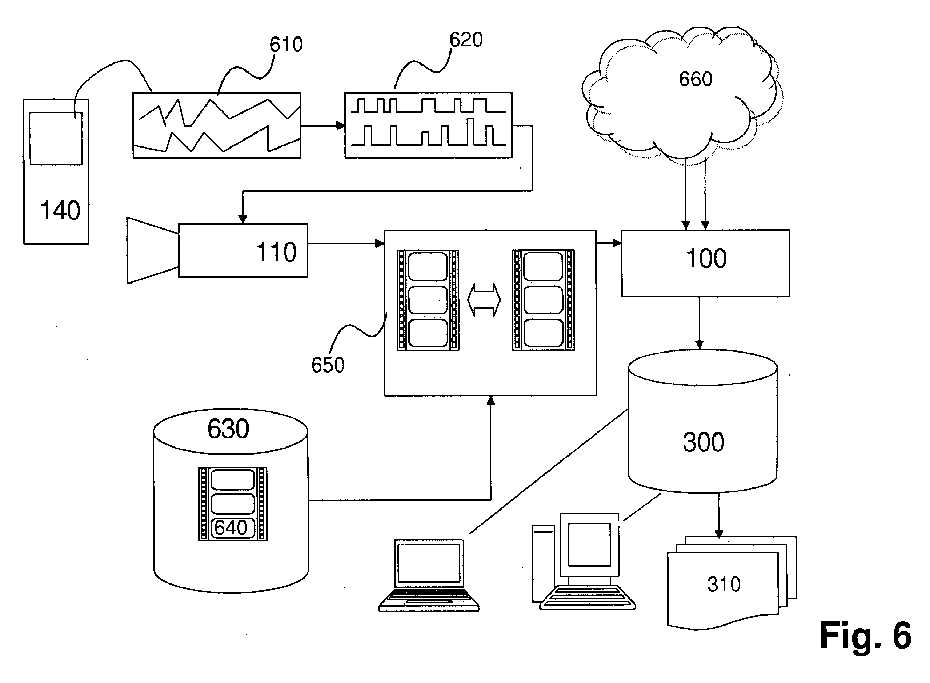

Figure 6 shows another example of the system according to the invention. The figure shows the device 140 to be tested, and a camera device 110. The device 140 to be tested provides measurement signals 610 relating to the representation properties of the display. These measurement signals 610 are used for computing/generating synchronization signals 620. The system also comprises a database 630 in which the reference or calibration video(s) 640 is (are) recorded. The system comprises means 650 for comparing the reference video 640 and the recorded video. The system may also comprise other measurement data or measurement equipment 660. Furthermore, the system comprises an analysis device 100 adapted to implement computation, filtering as well as analysis and alarms. In addition, the system is adapted to record measurement results in a test database 300 and further to report the measurement via user interfaces and reporting applications 310.

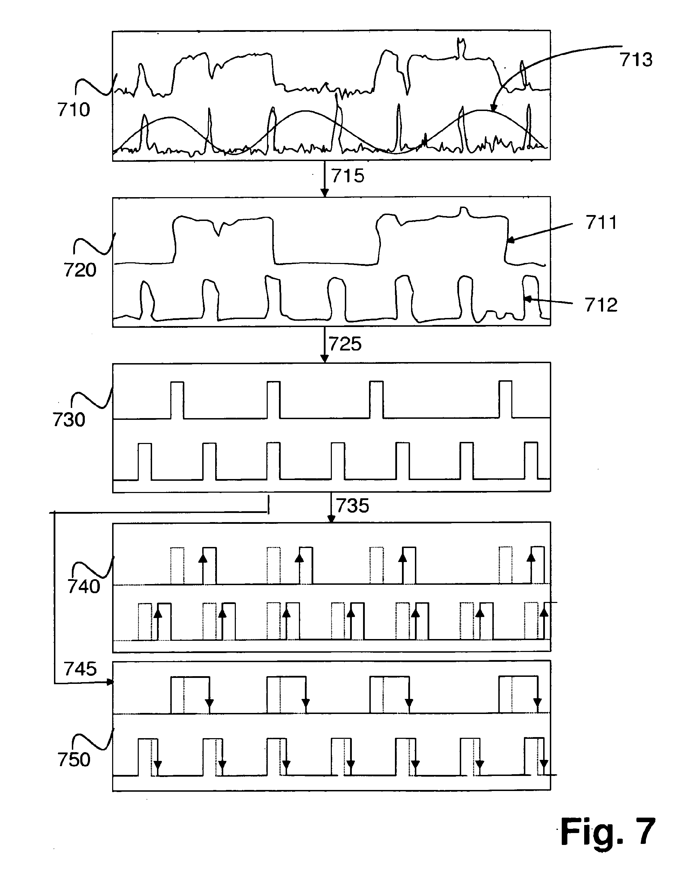

Further, Fig. 7 shows an example of the steps 610 to 620 shown in Fig. 6 and of the functions of the synchronization modules according to the invention. The signal components mentioned in the example are only examples of possible components, which will be obvious for a person skilled in the art. The synchronization module is adapted to filter out the interference signal, which may be caused by ambient light, or the like, from the measurement material 710 (raw signal) measured on the representation properties of the display (Fig. 713). The signal is subjected to low-pass and high-pass filtering 715, after which the low-pass filtered signal 711 indicates the change of successive images on the display and the high-pass filtered signal indicates the refresh rate of the display. The low-pass filter may cut out undesired refresh peaks of the signal, wherein the cut-off frequency can be converted, depending on the display to be examined.

After the filtering, the signals 720 are directed further to generate a synchronization pulse (725). The synchronization pulses 730 are delayed 735 (or advanced) for the time of the electro-optical response of the display. The delayed synchronization pulses 740, ready to use, are transmitted 745 to be prolonged (or shortened) by the time of the electro-optical response of the display, to produce prolonged precise synchronization signals 750, which are coupled to the external shutter release input of the camera device. In the arrangement according to the invention, the timing is important because of various optical or electric properties of the display, and variations in the response times. The synchronization module can be coupled at a distance from the device to be examined, by means of fibre optics utilizing collimation optics. Consequently, the surrounding areas of the test video do not disturb the generation of the synchronization signal.

It will be obvious for a person skilled in the art that the system according to the invention may also comprise other functions than those described above, to improve the efficiency of the arrangement of the invention. Furthermore, it will be obvious that the system according to the invention may also provide other automatic functions, for example for inputting data and maintaining data. The embodiments according to the invention are examples of the arrangement according to the invention, wherein a person skilled in the art will appreciate that the system according to the invention may involve a countless number of other databases and systems to which the present system is in a data transmission connection.

For example, in the analysis system of the present invention, it is also possible to use only a camera (e.g. a CMOS camera device, or the like) for synchronizing the measurement, instead of a separate synchronization module. In this case, the synchronization would be carried out inside the camera device in such a way that a cell is used separately for synchronizing the imaging, and the rest of the image area is used for normal imaging. The arrangement according to the invention has been described for immunity testing, but the invention is suitable for use in the measurement of the display of a device in general. In other words, the measurement method according to the invention can be utilized, *inter alia,* in the validation of displays and, for example, in the production testing or development by a display manufacturer. Furthermore, statistical properties, according to which the test result is determined, can be utilized in the testing. Thus the testing data can be, for example, a series of images containing an invariable image (for example, a monochrome display or a freeze frame). However, also in this series of images, the changing images can be identified by means of the synchronization area. Such an application is particularly suitable for such measuring of a display, where the image is to be stable within certain limits.

The above-presented examples must not be interpreted as restrictive to the invention presented in the claims hereinbelow.

## Claims

1. A method for electromagnetic interference testing of an electronic device, comprising
- obtaining measurement data from a display (145) of an electronic device (140), said measurement data comprising information on the representation properties of the display (145), and
said obtaining measurement data comprises
- displaying test images on the display (145) of said electronic device (140), the test images being composed of a stream of even and odd images, each of said even and odd images being marked with a synchronization identifier so that the synchronization identifier for the odd images contains different visual information than the synchronization identifier for the even images, and each of said test images is being marked with an image identifier to indicate the content of the test image , - detecting individual said even and odd images by using said synchronization identifier,
- capturing the test images as said measurement data; said method further comprises
- analysing the electromagnetic interferences in the measurement data on the basis of information contained in the test images.

2. The method according to claim 1, **characterized in that** the stream of images is a test video.

3. The method according to claim 1 or 2, **characterized in that** the detecting is performed by a synchronization module (120) with fibre optics (245) comprising one or more fibres.

4. The method according to claim 1 or 2, **characterized in that** the measurement data is captured by a camera (110).

5. The method according to any of the claims 1 to 4, **characterized in** comparing the measurement data with reference image material, and reporting the result of the formed image analysis.

6. The method according to any of the preceding claims 1 to 5, **characterized in that** the electronic device is a mobile device.

7. A system (100) for electromagnetic interference testing of an electronic device, being configured
- to receive measurement data from a display (145) of an electronic device (140), said measurement data comprising information on the representation properties of the display (145), and
**characterized in that** said system (100) is configured to
- display test images on the display (145) of said electronic device (140), the test images being composed of a stream of even and odd images, each of said even and odd image being marked with a synchronization identifier so that the synchronization identifier for the odd images contains different visual information than the synchronization identifier for the even images, and each of said test images being marked with an image identifier to indicate the content of the test image;
- detect said even and odd images by using said synchronization identifier, and
- analyse electromagnetic interferences in the measurement data on the basis of the information contained in the test images.

8. The system according to claim 7, **characterized in that** a camera device (110) imaging the display (145) is configured to capture the test images.

9. The system according to claim 7 or 8, **characterized in that** a synchronization module (120) with fibre optics (245) is configured to detect said even and odd images.

10. The system according to any of claims 7—9, **characterized in that** the stream of test images is a test video.

11. The system according to any of the claims 7—10, **characterized in that** the system is configured to compare the measurement data with reference image data, and to report the result of the image analysis.

12. The system according to claim 11, **characterized in that** the system is configured to define the result on one or more measurement graphs.

## Patentansprüche

1. Verfahren zum Testen elektromagnetischer Störbeeinflussungen einer elektronischen Vorrichtung, aufweisend
- das Erhalten von Messdaten von einer Anzeige (145) einer elektronischen Vorrichtung (140), wobei die Messdaten Informationen über die Darstellungseigenschaften der Anzeige (145) umfassen, und
wobei das Erhalten von Messdaten Folgendes aufweist:
- das Anzeigen von Testbildern auf der Anzeige (145) der elektronischen Vorrichtung (140), wobei die Testbilder aus einem Datenstrom von geraden und ungeraden Bildern bestehen, wobei jedes der geraden und ungeraden Bilder mit einem Synchronisationskennzeichen markiert ist, so dass das Synchronisationskennzeichen für die ungeraden Bilder andere visuelle Informationen enthält als das Synchronisationskennzeichen für die geraden Bilder, und wobei jedes der Testbilder mit einem Bildkennzeichen markiert ist, um den Inhalt des Testbildes anzuzeigen,
- das Erkennen der individuellen geraden und ungeraden Bilder durch Verwendung des Synchronisationskennzeichens,
- das Erfassen der Testbilder als die Messdaten;
wobei das Verfahren ferner Folgendes aufweist:
- das Analysieren der elektromagnetischen Störbeeinflussungen bei den Messdaten auf Grundlage von in den Testbildern enthaltenen Informationen.

2. Verfahren nach Anspruch 1, **dadurch gekennzeichnet, dass** der Datenstrom von Bildern ein Testvideo ist.

3. Verfahren nach Anspruch 1 oder 2, **dadurch gekennzeichnet, dass** das Erkennen durch ein Synchronisationsmodul (120) mit einer Faseroptik (245) erfolgt, die eine oder mehr Fasern enthält.

4. Verfahren nach Anspruch 1 oder 2, **dadurch gekennzeichnet, dass** die Messdaten durch eine Kamera (110) erfasst werden.

5. Verfahren nach einem der Ansprüche 1 bis 4, **gekennzeichnet durch** das Vergleichen der Messdaten anhand von Bildmaterial und das Berichten des Ergebnisses der erstellten Bildanalyse.

6. Verfahren nach einem der vorhergehenden Ansprüche 1 bis 5, **dadurch gekennzeichnet, dass** die elektronische Vorrichtung eine mobile Vorrichtung ist.

7. System (100) für das Testen elektromagnetischer Störbeeinflussungen einer elektronischen Vorrichtung, das dafür konfiguriert ist,
- Messdaten von einer Anzeige (145) einer elektronischen Vorrichtung (140) zu empfangen, wobei die Messdaten Informationen über die Darstellungseigenschaften der Anzeige (145) aufweisen, und
**dadurch gekennzeichnet, dass** das System (100) dafür konfiguriert ist,
- Testbilder auf der Anzeige (145) der elektronischen Vorrichtung (140) anzuzeigen, wobei die Testbilder aus einem Datenstrom von geraden und ungeraden Bildern bestehen, wobei jedes der geraden und ungeraden Bilder mit einem Synchronisationskennzeichen markiert ist, so dass das Synchronisationskennzeichen für die ungeraden Bilder andere visuelle Informationen enthält als das Synchronisationskennzeichen für die geraden Bilder, und jedes der Testbilder mit einem Bildkennzeichen markiert ist, um den Inhalt des Testbildes anzuzeigen;
- die geraden und ungeraden Bilder unter Verwendung des Synchronisationskennzeichens zu erkennen, und
- elektromagnetische Störbeeinflussungen bei den Messdaten auf Grundlage von in den Testbildern enthaltenen Informationen zu analysieren.

8. System nach Anspruch 7, **dadurch gekennzeichnet, dass** eine Kameravorrichtung (110), die die Anzeige (145) abbildet, dafür konfiguriert ist, die Testbilder zu erfassen.

9. System nach Anspruch 7 oder 8, **dadurch gekennzeichnet, dass** ein Synchronisationsmodul (120) mit einer Faseroptik (245) dafür konfiguriert ist, die geraden und ungeraden Bilder zu erkennen.

10. System nach einem der Ansprüche 7 bis 9, **dadurch gekennzeichnet, dass** der Datenstrom von Testbildern ein Testvideo ist.

11. System nach einem der Ansprüche 7 bis 10, **dadurch gekennzeichnet, dass** das System dafür konfiguriert ist, die Messdaten mit Bezugsmessdaten zu vergleichen und über das Ergebnis der Bildanalyse zu berichten.

12. System nach Anspruch 11, **dadurch gekennzeichnet, dass** das System dafür konfiguriert ist, das Ergebnis an einem oder an mehreren Messdiagrammen zu definieren.

## Revendications

1. Procédé de test d'interférences électromagnétiques d'un dispositif électronique, comprenant
- l'obtention de données de mesure à partir d'un afficheur (145) d'un dispositif électronique (140), lesdites données de mesure comprenant une information sur les propriétés de représentation de l'afficheur (145), et
ladite obtention de données de mesure comprend
- l'affichage d'images de test sur l'afficheur (145) dudit dispositif électronique (140), les images de test étant composées d'un flux d'images paires et impaires, chacune desdites images paires et impaires étant marquée avec un identifiant de synchronisation de telle manière que l'identifiant de synchronisation pour les images impaires contient des informations visuelles différentes de celles de l'identifiant de synchronisation pour les images paires, et chacune desdites images de test est marquée avec un identifiant d'image pour indiquer le contenu de l'image de test,
- la détection desdites images paires et impaires individuelles en utilisant ledit identifiant de synchronisation,
- la capture des images de test comme lesdites données de mesure ;
ledit procédé comprend en outre
- l'analyse des interférences électromagnétiques dans les données de mesure sur la base de l'information contenue dans les images de test.

2. Procédé selon la revendication 1, **caractérisé en ce que** le flux d'images est une vidéo de test.

3. Procédé selon la revendication 1 ou 2, **caractérisé en ce que** la détection est effectuée par un module de synchronisation (120) avec une fibre optique (245) comprenant une ou plusieurs fibre(s).

4. Procédé selon la revendication 1 ou 2, **caractérisé en ce que** les données de mesure sont capturées par une caméra (110).

5. Procédé selon l'une quelconque des revendications 1 à 4, **caractérisé par** la comparaison des données de mesure avec un matériel d'images de référence et le rapport du résultat de l'analyse d'image formée.

6. Procédé selon l'une quelconque des revendications précédentes 1 à 5, **caractérisé en ce que** le dispositif électronique est un dispositif mobile.

7. Système (100) de test d'interférences électromagnétiques d'un dispositif électronique, étant configuré
- pour recevoir des données de mesure à partir d'un afficheur (145) d'un dispositif électronique (140), lesdites données de mesure comprenant une information sur les propriétés de représentation de l'afficheur (145), et
**caractérisé en ce que** ledit système (100) est configuré pour
- afficher des images de test sur l'afficheur (145) dudit dispositif électronique (140), les images de test étant composées d'un flux d'images paires et impaires, chacune desdites images paires et impaires étant marquée avec un identifiant de synchronisation de telle manière que l'identifiant de synchronisation pour les images impaires contient des informations visuelles différentes de celles de l'identifiant de synchronisation pour les images paires, et chacune desdites images de test étant marquée avec un identifiant d'image pour indiquer le contenu de l'image de test ;
- détecter lesdites images paires et impaires en utilisant ledit identifiant de synchronisation, et
- analyser des interférences électromagnétiques dans les données de mesure sur la base de l'information contenue dans les images de test.

8. Système selon la revendication 7, **caractérisé en ce qu'**un dispositif de caméra (110) imageant l'afficheur (145) est configuré pour capturer les images de test.

9. Système selon la revendication 7 ou 8, **caractérisé en ce qu'**un module de synchronisation (120) avec une fibre optique (245) est configuré pour détecter lesdites images paires et impaires.

10. Système selon l'une quelconque des revendications 7 à 9, **caractérisé en ce que** le flux d'images de test est une vidéo de test.

11. Système selon l'une quelconque des revendications 7 à 10, **caractérisé en ce que** le système est configuré pour comparer les données de mesure avec des données d'images de référence, et pour rapporter le résultat de l'analyse d'image.

12. Système selon la revendication 11, **caractérisé en ce que** le système est configuré pour définir le résultat sur un ou plusieurs graphique(s) de mesure.
